Europäisches Patentamt

European Patent Office

Office européen des brevets

(11) Veröffentlichungsnummer: **0 295 722**
**A1**

(12) # EUROPÄISCHE PATENTANMELDUNG

(21) Anmeldenummer: **88109814.9**

(22) Anmeldetag: **20.06.88**

(51) Int. Cl.4: **C02F 1/12**

(30) Priorität: **19.06.87 DE 3720408**

(43) Veröffentlichungstag der Anmeldung:
**21.12.88 Patentblatt 88/51**

(84) Benannte Vertragsstaaten:
**AT BE CH DE ES FR GB GR IT LI LU NL SE**

(71) Anmelder: **Briccoli Bati, Hermine**
**Via Q. Sella 31**
**Florenz(IT)**

Anmelder: **Briccoli Bati, Sylvia**
**Via Q. Sella 31**
**Florenz(IT)**

Anmelder: **Briccoli Bati, Caterina, Dr.**
**Filice Piazza Europa 9**
**I-87100 Cosenza(IT)**

Anmelder: **Van Sumere, Hilde**
**Hoogstraat 31**
**B-1650 Beersel(BE)**

(72) Erfinder: **Hussmann, Peter, Dr.**
**Via dei Pucci 4**
**I-50100 Florenz(IT)**

(74) Vertreter: **Haug, Dietmar**
**Patentanwälte Andrae, Flach, Haug, Kneissl**
**Steinstrasse 44**
**D-8000 München 80(DE)**

(54) **Verfahren und Vorrichtung zur umweltschonenden Beseitigung des bei der Olivenpressung anfallenden Abwassers.**

(57) Das bei der Olivenpressung anfallende Abwasser wird umweltschonend dadurch beseitigt, daß das Abwasser in einem Strom ungesättigter Luft aus der Umgebung verdunstet wird, wobei das Abwasser in einem Turm versprüht und die Luft im Gegenstrom zu dem Abwasser durch den Turm geführt wird. Das durch die Verdunstung erhaltene Konzentrat hat einen Trockensubstanzgehalt von 30 bis 50 % und wird der Trocknung zugeführt, um die in dem Abwasser enthaltenen organischen Substanzen in Pulverform zu erhalten.

# Verfahren und Vorrichtung zur umweltschonenden Beseitigung des bei der Olivenpressung anfallenden Abwassers

Die Erfindung betrifft ein Verfahren und eine Vorrichtung zur umweltschonenden Beseitigung des bei der Olivenpressung anfallenden Abwassers.

In allen Mittelmeerländern und speziell in Italien, wo es allein über 12 000 Olivenölmühlen gibt, wird die Umwelt erheblich durch das bei der Pressung der Oliven anfallende Abwasser belastet, das je nach dem für die Pressung angewandten Verfahren 8 bis 17 % organische Substanzen enthält. Es sind zwar eine Reihe von speziell die Umwelt nicht belastende Verfahren zur Beseitigung oder Aufarbeitung des Abwassers entwickelt worden, die von der Ultrafiltration bis zur Destillation und Verdampfung und schließlich sogar zum Verbrennen des Abwassers im Feuerstrahl geführt haben. Alle diese Verfahren sind jedoch mit mehr oder weniger gravierenden technischen Problemen behaftet und erfordern erhebliche Investitions- und Betriebskosten, welche die Olivenpressung stark verteuern. Besonders das Verbrennen des Abwassers im Feuerstrahl stellt durch die Vernichtung der in ihm enthaltenen organischen Substanzen nicht nur privatwirtschaftlich, sondern auch volkswirtschaftlich gesehen eine fast absurde und kaum zu vertretende Lösung dar.

Die Belastung der Umwelt durch das bei der Olivenpressung anfallende Abwasser und die bei seiner Beseitigung mit den bekannten Verfahren auftretenden Probleme sind um so - schwerwiegender geworden, als die moderne technische Entwicklung bei der Olivenpressung zu einem Verfahren geführt hat, das auf der einen Seite eine höhere Ausbeute von Öl und damit eine stärkere Wirtschaftlichkeit erreichen läßt, auf der anderen Seite aber auch zu einer Verdreifachung des anfallenden Abwassers führt. Dies geschieht dadurch, daß im Gegensatz zum traditionellen Verfahren, bei dem die Oliven gemahlen und ohne Zusatz von Wasser gepreßt werden, beim modernen, sogenannten kontinuierlichen Verfahren im Verhältnis 1 : 1 warmes Wasser der Olivenmasse zugegeben wird. Das bedeutet gleichzeitig mehr als eine Halbierung der im Abwasser enthaltenen organischen Stoffe, die von 17 % auf 8 %T.S. (Trockensubstanzgehalt) zurückgehen. Durch das moderne Verfahren fällt also die dreifache Abwassermenge mit einem auf die Hälfte reduzierten Trockensubstanzgehalt an, wodurch sich die Belastungen für die Umwelt verdreifachen und die Schwierigkeiten einer wirtschaftlichen Beseitigung dieses Abwassers weiter gesteigert werden.

Die der Erfindung zugrundeliegende Aufgabe besteht darin, ein technologisch ebenso einfaches wie sicheres Verfahren zur umweltschonenden Beseitigung des bei der Olivenpressung anfallenden Abwassers zu schaffen, das nur geringe Investitions- und Betriebskosten erfordert und die Gewinnung eines marktfähigen Produktes aus den in dem Abwasser enthaltenen organischen Substanzen ermöglicht, durch das die durch die Investitions- und Betriebskosten des Abwasserbeseitigungsverfahrens entstandene Verteuerung der Olivenölherstellung zumindest teilweise wieder aufgehoben wird oder je nach Verwendung dieses Produktes ein Gewinn entsteht.

Die Aufgabe der Erfindung wird dadurch gelöst, daß das Abwasser in einem Strom ungesättigter Luft aus der Umgebung verdunstet wird.

In vorteilhafter Weise kann das Abwasser in einem Turm verteilt und die Luft im Gegenstrom zu dem Abwasser durch den Turm geführt werden, wobei das Abwasser vorzugsweise durch Versprühen in dem Turm verteilt wird. Durch eine zusätzliche Erwärmung des Abwassers, beispielsweise durch Sonneneinstrahlung kann die Verdunstung noch verbessert werden. Das Verfahren kann aber auch ohne Wärmezu- und -abfuhr von bzw. nach außen, d.h. adiabatisch, durchgeführt werden.

In wirtschaftlicher Hinsicht ist es von Vorteil, wenn das Abwasser durch Verdunstung eines Teiles seines Flüssigkeitsanteils in ein Feststoffe und Restflüssigkeit enthaltendes Konzentrat übergeführt wird, aus dem durch Trocknung die Restflüssigkeit eliminiert wird.

Durch die Trocknung des Konzentrats mit seinen organischen Substanzen wird auf sehr wirtschaftlicher Basis ein polymarktfähiges Produkt in Pulverform geschaffen, das auch die Grundlage für weitere Unterprodukte darstellt. Durch die Gewinnung dieses Produktes trägt sich das erfindungsgemäße Verfahren ganz oder fast ganz selbst,und die Olivenherstellung selbst wird nicht oder mit nur geringen Kosten mehrbelastet. Mit dem erfindungsgemäßen Verfahren werden somit die von dem bei der Olivenpressung anfallenden Abwasser ausgehenden Umweltgefahren beseitigt und wird je nach Marktverwendung des Abfallproduktes und bei größeren Kapazitäten der Produktion des Abfallproduktes ein Gewinn erzielt.

Das Verhältnis von zu verdunstender Flüssigkeit und Luft wird bei dem erfindungsgemäßen Verfahren so gewählt, daß die zur Verdunstung erforderliche Wärme hauptsächlich oder sogar ausschließlich von der Luft geliefert wird, wobei im letzteren Fall die Verdunstung dann adiabatisch erfolgt, bei der im I-X Diagramm von Mollier DI/DX ≈ 0.

Die Verdunstung des Abwassers wird so weit betrieben, daß eine flüssige Lösung übrigbleibt, die einen Trockensubstanzgehalt von 40 bis 50 %, vorzugsweise 40 %, hat. Eine Steigerung des Trockensubstanzgehaltes von 40 % auf 50 % führt zwar zu einer Verminderung der Trocknungskosten um 20 %, es muß jedoch dabei eine qualitative Verschlechterung des Endproduktes in Kauf genommen werden.

Das Konzentrat wird vorzugsweise in einem Strom entfeuchteter Luft von etwa 30°C sprühgetrocknet, wobei sie Feuchtigkeit aufnimmt, die ihr anschließend durch Vorbeileiten an einem Adsorptionsmittel wieder entzogen wird.

Dieses Adsorptionsmittel wird periodisch mit durch Verbrennung erhitzte Desorptionsluft regeneriert. Die dabei entstehenden Dämpfe werden bei der zur Erhitzung der Desorptionsluft dienenden Verbrennung mitverbrannt.

Die Trocknung im Sprühverfahren mit entfeuchteter Luft von etwa 30°C hat den Vorteil, daß sie sehr schonend für das Endprodukt ist und praktisch keine üblen Gerüche erzeugt. Durch die Verbrennung der bei der Desorption entstehenden Dämpfe wird praktisch jede Belästigung durch übelriechende Gase ausgeschlossen. Die zur Erhitzung der Desorptionsluft dienende Verbrennung erfordert nur einen Bruchteil der Kosten, die bei einem Abwasserbeseitigungsverfahren anfallen, bei dem das gesamte Abwasser direkt verbrannt wird. Das erhaltene Endprodukt ist beispielsweise als Futtermittel verwendbar, wenn es sehr schonend wie bei dem beschriebenen Sprühverfahren getrocknet wurde.

Die Vorrichtung zur Durchführung des erfindungsgemäßen Verfahrens besteht im wesentlichen aus einem Turm, der an seinem unteren Ende eine Einrichtung zu Einleitung der Luft und eine Einrichtung zum Sammeln des Abwasserkonzentrats aufweist. An seinem oberen Ende hat er eine Einrichtung zur Tropfenabscheidung. Dazwischen ist eine Düseneinrichtung zum Versprühen des Abwassers vorgesehen. Die am unteren Ende des Turmes eingeleitete Luft wird im Gegenstrom zu der versprühten Abwasserversprüheinrichtung hindurch nach oben geführt. Dann tritt sie durch die Tropfenabscheideeinrichtung hindurch, die ein Hochreißen von Flüssigkeitspartikeln vermeidet.

Der Turm hat eine zylindrische oder venturiartige Form und einen im Bereich von 5 bis 20 m liegenden Durchmesser. Er ist etwa 12 m hoch. Die Abwasserversprüheinrichtung ist in etwa 8 m Höhe angeordnet. Der Tropfenabscheider ist tangential angeordnet oder filterbauartig ausgeführt. Die Geschwindigkeit des Luftstromes im Gegenstrom beträgt je nach den Randbedingungen 0,8 bis 1,6 m/s.

Anhand der folgenden Zahlenbeispiele wird die Erfindung näher erläutert:

## Fall A

Bei einer Ölmühle mit einer Olivenverarbeitungskapazität von 10 t/24 h fallen bei der Pressung nach der klassischen Methode, d.h. ohne Zugabe von $H_2O$, 5000 kg Abwasser mit 17 % T.S. (= 900 kg Pulver) an.

### 1. Vorkonzentration

Es erfolgt eine Vorkonzentration durch Verdunstung von 17 % T.S. auf 40 % T.S., so daß eine Konzentratmenge von 2140 kg mit 40 % T.S. übrigbleibt. Demnach sind 2860 kg $H_2O$ in 24 h zu verdunsten, also rd. 120 kg $H_2O$ in 1 h. Unter Berücksichtigung der Schwankungen des Feuchtigkeitsaufnahmevermögens der Luft wird damit gerechnet, daß zur Verdunstung von 1 g $H_2O$ 1 $m^3$ Luft benötigt wird. Demnach sind 120 000 $m^3$/h Luft zur Verdunstung von einer Wassermenge von 120 kg/h erforderlich. Um diese Verdunstungsmenge zu erzielen, müssen 70 $m^3$/h Abwasser umgepumpt und versprüht und im Gegenstrom 120 000 $m^3$/h Luft geführt werden.

Der verwendete Verdunstungsturm hat einen Durchmesser von 5 m und eine Höhe von 12 m.

### 2. Trocknung

2140 kg Konzentrat zu 40 % T.S. (= 900 kg Pulver) werden in 24 h der Trocknung zugeführt. Dies bedeutet, daß 50 kg/h Wasser bei der Trocknung eliminert wird.

## Fall B

Bei einer Ölmühle mit einer Olivenverarbeitungskapazität von 24 t/24 h werden 10 t $H_2O$ bei der Pressung hinzugegeben. Es fallen dann 15 000 kg Abwasser mit 8 % T.S. (= 1200 kg Pulver) an.

### 1. Vorkonzentration

12 000 kg $H_2O$ sind zu verdunsten, wobei unter der Annahme, daß zur Verdunstung von 1 g $H_2O$ 1 $m^3$ Luft erforderlich ist, müssen 480 000 $m^3$/h Luft zur Verdunstung von 480 kg $H_2O$/h aufgewendet werden. Hierzu müssen 280 $m^3$/h Abwasser umge-

pumpt und versprüht werden. 480 000 m³/h Luft werden im Gegenstrom geführt.

Der Verdunstungsturm hat einen Durchmesser von 12 m und eine Höhe von 12 m.

## 2. Trocknung

3000 kg Konzentrat mit 40 % T.S. ( = 1200 kg Pulver) werden der Trocknung zugeführt. 1800 kg $H_2O$ sind daher bei der Trocknung zu eliminieren.

Im Fall A verbleiben 2140 kg Konzentrat, von denen in der Trocknung 1240 kg $H_2O$ eliminiert werden müssen. Im Fall B verbleiben 3000 kg Konzentrat, von denen 1800 kg $H_2O$ in der Trocknung eliminiert werden müssen.

Es verbleiben im Fall A 900 kg und im Fall B 1200 Pulver mit jeweils 5 bis 6 % Restfeuchte.

Im Falle einer primitiven Verwendung des Pulvers, wie z.B. Verbrennung oder als Düngemittel, genügt zur Trocknung ein einfacher Walzentrockner, während für die höherwertige Verwendung, z.B. als Futtermittel, eine schonende Trocknung im Sprühverfahren mit entfeuchteter Luft bei 30° C vorgesehen ist.

Die bei der Trocknung mit Walzentrocknern entstehenden Dämpfe, die einen üblen Geruch haben, werden mit den zur Beheizung notwendigen Feuergasen vermischt und verbrannt. Bei der Trockung im Sprühverfahren treten direkt überhaupt keine Gerüche auf. Lediglich die bei der Desorption des Adsorptionsmittels entstehenden Dämpfe haben einen üblen Geruch. Diese Dämpfe werden abgesaugt und bei der zur Beheizung der Desorptionsluft dienenden Verbrennung mitverbrannt.

## Ansprüche

1. Verfahren zur umweltschonenden Beseitigung des bei der Olivenpressung anfallenden Abwassers, dadurch gekennzeichnet, daß das Abwasser in einem Strom ungesättigter Luft aus der Umgebung verdunstet wird.

2. Verfahren nach Anspruch 1, dadurch gekennzeichnet, daß das Abwasser in einem Turm verteilt und die Luft im Gegenstrom zu dem Abwasser durch den Turm geführt wird.

3. Verfahren nach Anspruch 2, dadurch gekennzeichnet, daß das Abwasser in dem Turm durch Versprühen verteilt wird.

4. Verfahren nach einem der vorhergehenden Ansprüche, dadurch gekennzeichnet, daß das Abwasser zuvor erwärmt wird.

5. Verfahren nach einem der Ansprüche 1 bis 4, dadurch gekennzeichnet, daß die Verdunstung des Abwassers adiabatisch durchgeführt wird.

6. Verfahren nach einem der vorhergehenden Ansprüche, dadurch gekennzeichnet, daß das Abwasser durch Verdunstung eines Teiles seines Flüssigkeitsanteils in ein Feststoffe und Restflüssigkeit enthaltendes Konzentrat übergeführt wird, aus dem durch Trocknung die Restflüssigkeit eliminiert wird.

7. Verfahren nach Anspruch 6, dadurch gekennzeichnet, daß das Konzentrat einen Trockensubstanzgehalt von 30 bis 50 % hat.

8. Verfahren nach Anspruch 7, dadurch gekennzeichnet, daß das Konzentrat einen Trockensubstanzgehalt von 40 % aufweist.

9. Verfahren nach einem der Ansprüche 6 bis 8, dadurch gekennzeichnet, daß das Konzentrat in einem Strom entfeuchteter Luft sprühgetrocknet wird, welche dabei Feuchtigkeit aufnimmt, die ihr durch anschließendes Vorbeileiten an einem Adsorptionsmittel wieder entzogen wird, das periodisch mit durch Verbrennung erhitzter Desorptionsluft regeneriert wird, wobei Dämpfe entstehen, die bei der zur Erhitzung der Desorptionsluft dienenden Verbrennung mitverbrannt werden.

10. Verfahren nach Anspruch 9, dadurch gekennzeichnet, daß die zur Sprühtrocknung verwendete Luft eine Temperatur von bis zu 30° C hat.

11. Vorrichtung zur Durchführung des Verfahrens nach einem der vorhergehenden Ansprüche, gekennzeichnet durch einen Turm, der an seinem unteren Ende eine Einrichtung zur Einleitung von Luft und eine Abwasserkonzentratsammeleinrichtung, und an seinem oberen Ende eine Tropfenabscheideeinrichtung, und zwischen der Lufteinleitungseinrichtung und der Tropfenabscheideeinrichtung eine Abwasserversprüheinrichtung aufweist, wobei die am unteren Ende eingeleitete Luft im Gegenstrom zu dem versprühten Abwasser durch die Abwasserversprüheinrichtung und anschliessend durch die Tropfenabscheideeinrichtung hindurchführbar ist, bevor sie aus dem Turm an dessen oberen Ende austritt.

## EINSCHLÄGIGE DOKUMENTE

EP 88109814.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB - A - 1 588 875 (BORSODI) <br> * Anspruch 1; Seite 2, Zeile 129 - Seite 3, Zeile 12 * <br> -- | 1-3,11 | C 02 F 1/12 |
| P,X | WO - A1 - 88/02 352 (DNEP RODZERZHINSKY INDUSTRIALNY INSTITUT IMENI M.I. ARSENICHEVA) (07-04-88) <br> * Zusammenfassung * <br> -- | 1-4,11 | |
| A | US - A - 4 632 766 (FIRNHABER) <br> * Ansprüche 1-3 * <br> -- | 1-4,11 | |
| A | US - A - 4 309 285 (GALLAHER) <br> * Spalte 2, Zeilen 5-27; Fig. 2 * <br> -- | 1-3,11 | RECHERCHIERTE SACHGEBIETE (Int. Cl.4) <br><br> C 02 F |
| A | DD - A1 - 243 018 (VEB) <br> * Seite 1, Zeilen 31-39 * <br> ---- | 1-3,11 | |

Der vorliegende Recherchenbericht wurde für alle Patentansprüche erstellt.

| Recherchenort | Abschlußdatum der Recherche | Prüfer |
|---|---|---|
| WIEN | 08-09-1988 | WILFLINGER |